# EUROPEAN PATENT SPECIFICATION

(11) **EP 0 359 762 B1**
(45) Date of publication and mention of the grant of the patent: **10.08.1994**
(21) Application number: 88903893.1
(22) Date of filing: 03.05.1988
(51) Int. Cl.: G08B 13/12

(54) **SENSING ELEMENT FOR AN ALARM SYSTEM**
FÜHLERELEMENT FÜR EIN ALARMSYSTEM
DETECTEUR POUR SYSTEME D'ALARME

(30) Priority: 01.05.1987 WO PCT/GB87/00289
(43) Date of publication of application: 28.03.1990
(73) Proprietor: WOLF, Adrian Francis, Liverpool L37 1YE (GB)
(72) Inventor: WOLF, Adrian Francis, Liverpool L37 1YE (GB)
(74) Representative: Wilson, Nicholas Martin
(86) International application number: GB8800345
(87) International publication number: WO8808594

(56) References cited:
- DE-A- 2 441 054
- GB-A- 1 602 744

## Description

This invention relates to an alarm system which can be associated with a flexible closure to sense attempts of an unauthorised person to cut through or disturb the closure.

There have been several proposals for alarm systems for flexible closures such as 'curtainsider' lorry sides; usually these systems are based upon a network of conductive sensing elements which are attached to or otherwise incorporated into the flexible closure and which form part of an alarm circuit carrying a small electric current. The network is so arranged that, if the closure is cut to any significant extent, the elements will be disturbed or broken. This causes the current to vary or to stop flowing altogether, a variation which can be used to trigger an alarm thereby preventing unauthorised access to the area enclosed by the closure means. In other alarm systems, the alarm can be triggered by 'making' a circuit between two normally unconnected sensing elements, the elements being deflected into contact with one another by disturbance or cutting, or being connected by a conductive cutting implement.

Although most known alarm systems provide a reasonable measure of protection, these systems can often be overcome by a determined and resourceful person. A major problem is that an unauthorised person can readily gain access to the sensing elements and tamper with them so that the system fails to trigger an alarm when other elements are subsequently cut or disturbed. In particular, certain sensing elements of the network can be connected to one another so that the current continues to flow steadily through the alarm circuit, thereby maintaining a non-alarm condition even when elements in other parts of the network are being cut or disturbed.

An object of this invention is to provide an improved alarm system, which overcomes or mitigates the disadvantages of known systems.

According to the present invention there is provided an alarm system comprising a first alarm circuit at least partially defined by means of a first conductor, a second alarm circuit independent of said first circuit and at least partially defined by means of a second conductor,
characterised in that the alarm system is for protecting a flexible closure, and in that the first and second conductors are enclosed in a common outer sheath together with at least one other dummy "conductor" of substantially identical appearance to both said conductors but which does not form part of any circuit, to define a wire which is laid in a network over a surface of the flexible closure to be protected.

It is preferred that the coductors are braided, twisted or plaited together to form a wire. Each conductor is preferably sheathed with insulating material before being formed into the wire. In preferred embodiments the sensing element also includes a flexible backing strip to which the wires are attached, the strip being for attachment to flexible closure means.

The invention will now be described, by way of example, with reference to the accompanying drawings in which:
Figure 1 is a part-sectioned elevational view illustrating aspects of an alarm system according to this invention;
Figure 2 is a perspective view showing a preferred embodiment of a sensing element used in an alarm system according to this invention; and
Figure 3 is a part-sectioned detail view showing aspects of part of the sensing element shown in Figure 2.

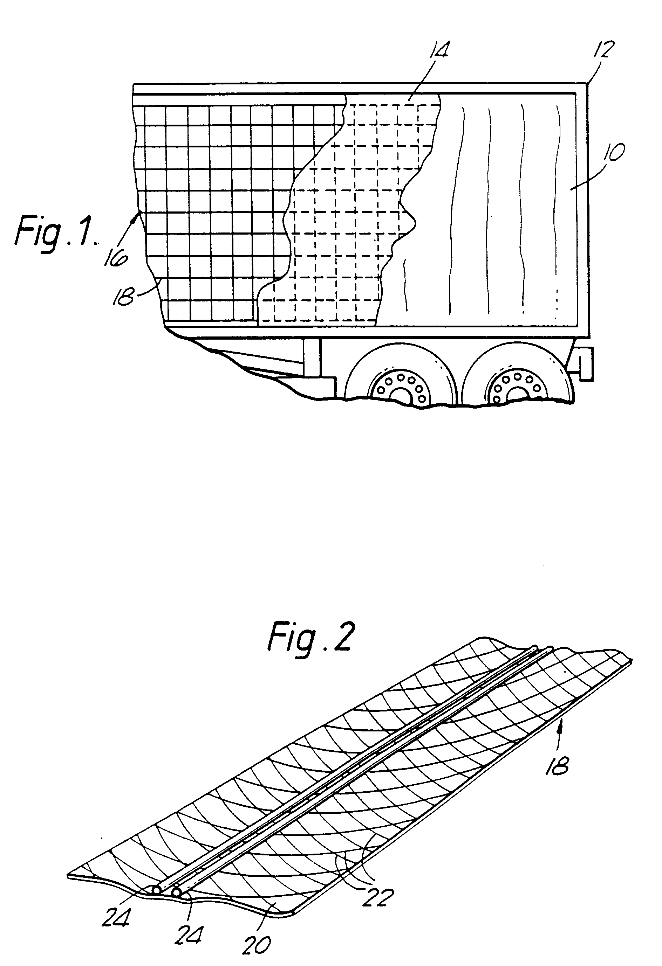

Referring to Figure 1 of the drawings, an alarm system incorporating the sensing element of this invention is shown in relation to a 'curtainsider' goods vehicle, although this type of alarm system can be applied to any of a variety of flexible closures such as car hoods or boat covers as will be clear to those skilled in the art.

In Figure 1, a flexible protective sheet 10 extends over substantially all of the area of the side openings defined by the vehicle's support structure 12. The sheet 10 is of the type conventionally used in a curtainsider vehicle, hanging as a curtain by its upper edge from the support structure 12 and being made of canvas, p.v.c., or other flexible sheeting material. A similarly-sized inner sheet 14, which can also be made of canvas; p.v.c. or the like, is bonded, welded or stitched to the inner surface of sheet 10 in such a position that sheet 10 completely overlays the inner sheet 14.

The inner sheet 14 carries a network 16 of closely-spaced conductive sensing elements 18 extending over substantially all of its area, the elements 18 preferably being stitched to the inner sheet 14 although they may be attached thereto by any suitable means such as adhesive or welding. The network 16 is arranged such that making a cut of significant length anywhere on sheet 10 will also cut sheet 14 thereby disturbing or breaking at least one sensing element 18. The network 16 carries a small electric current, and disturbing or breaking an element 18 varies this current which can be used to activate an alarm.

Further details of the alarm system outlined above are contained in the Applicants co-pending International Patent Application No. PCT/GB87/00289, published under number WO87/06749, details of which are incorporated herein by reference.

Figure 2 of the drawings illustrates a preferred embodiment of sensing element 18, which comprises a backing strip 20 of p.v.c. or other suitable flexible material. Backing strip 20 is preferably reinforced with laminated crisscross nylon strands 22 as shown, and is suitably about 32mm wide by about 0.30mm thick although its dimensions can be chosen to suit any particular application.

Extending longitudinally along, and attached to, the central portion of one side of backing strip 20 are two insulated wires 24 which lie substantially parallel to and separate from one another. The wires 24 may be attached to the backing strip 20 by any suitable means such as bonding, welding or laminating. It is preferred that the wires 24 are connected to each other in series as part of the same electrical circuit, although the wires 24 could alternatively be connected in parallel or could belong to different electrical circuits.

In use, the sensing element 18 is bonded, welded, stitched or otherwise attached to the inner face of inner sheet 14, with the wires 24 facing the sheet 14 and with the points of attachment extending along the backing strip 20 on either side of the wires 24 such that the wires 24 are shrouded in a protective pocket between the backing strip 20 and the sheet 14. Suitable lengths of the sensing element 18 can be arranged and attached to the inner sheet 14 so as to build up a network of elements as desired. The wires 24 associated with the various lengths of sensing element 18 can be connected together at their ends to form an electrical circuit for triggering an alarm in case of unauthorised tampering.

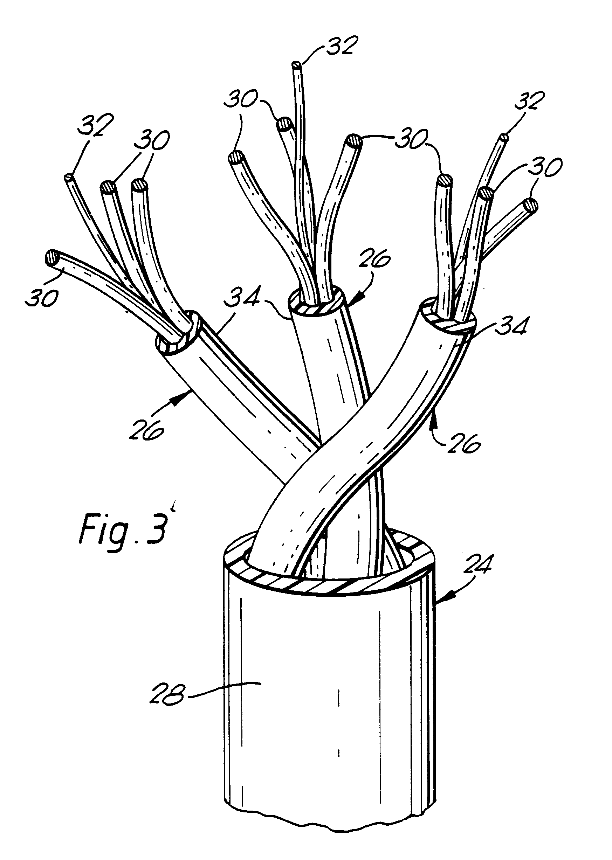

A preferred embodiment of wire 24 is illustrated in detail in Figure 3 and includes three inner conductors 26 contained within an insulating outer sheath 28. Each inner conduct or 26 is made up of three strands 30 of conductive tinsel wire twisted about a polyester or cotton thread 32 and is shrouded by an insulating inner sheath 34. The inner conductors 26 are plaited, twisted or braided together and are substantially identical in appearance to one another so that they cannot be distinguished between.

In one embodiment of this invention, at least one of the inner conductors 26 (A) is not part of the main alarm circuit but is instead a dummy carrying no current. Therefore, if an unauthorised intruder should make a connection to the dummy inner conductor A in an attempt to circumvent the alarm, the alarm will not be disabled because the remaining 'live' inner conductor (B) will be unaffected. If a large number of inner conductors 26 are employed, the intruder will find it difficult or impossible to pick out the live conductor(s) from the dummy conductors, which will delay and therefore help to deter the intruder. Moreover, as the number of inner conductors 26 increases it becomes more impractical for the intruder to make connections to all of the inner conductors 26 if he tries to ensure that he has made connections to the live inner conductors B.

In other embodiments, at least one of the inner conductors 26 (C) is again separate from the main alarm circuit, but instead of being a dummy the conductor is connected into a further alarm circuit. If an intruder should connect an inner conductor 26 from another sensing element 18 to conductor C, the voltage of, or current with in conductor C will change. These effects can be positively sensed by the further alarm circuit so that any connection to conduct or C triggers an alarm. One of the dummy inner conductors 26 could be earthed so as to cause a voltage drop if connected to a 'live' conductor 26; this voltage drop can be sensed and used to trigger an alarm.

It is envisaged that tampering with the main alarm system itself can be sensed by sensing means which detect certain changes in the voltage or current characteristics of the circuit, thereby sounding an alarm in the unlikely event that an intruder should succeed in making connections to the live inner conductors B without being caught.

It will be clear that the inner conductors 26 can be a mixture of types A and B, or B and C, or A, B and C. It is possible for wires 24, or even entire sensing elements 18 to be dummies or to be capable of sensing attempts to short-circuit the network by interconnection of sensing elements. There may be any number of wires 24 and they may contain any suitble number of inner conductors 26 having any number of tinsel-wire strands 30. It will be clear that the conductors 26 need not actually be conductive if they are dummies, it being more important that the dummy conductors are substantially indistinguishable from the live conductors.

A further feature of this invention is that an unauthorised intruder is deterred by having to cut through two layers of sheath material to gain access to each inner conductor; the sheath material may be reinforced to hamper access still further by acting as a barrier.

## Claims

1. An alarm system comprising a first alarm circuit at least partially defined by means of a first conductor (26B), a second alarm circuit independent of said first circuit and at least partially defined by means of a second conductor (26C),
characterised in that the alarm system is for protecting a flexible closure (10,14), and in that the first and second conductors (26B,26C) are enclosed in a common outer sheath (28) together with at least one other dummy "conductor" (26A) of substantially identical appearance to both said conductors (26B,26C) but which does not form part of any circuit, to define a wire (24) which is laid in a network (16) over a surface of the flexible closure (10,14) to be protected.

2. A system according to claim 1, characterised in that the second alarm circuit is for sensing and alerting against attempts to tamper with the wire (24).

3. A system according to claim 1, characterised in that the conductors (26A,26B,26C) are braided, twisted or platted together within said sheath (28).

4. A system according to claim 1, characterised in that the wire (24) is supported on a backing strip (20) which is adapted for attachment to the flexible closure (10,14).

5. A system according to claim 1, characterised in that at least one of said conductors (26A,26B,26C) is made up of a plurality of wires (30) twisted together.

## Patentansprüche

1. Ein Alarmsystem, umfassend einen ersten Alarmkreis, der wenigstens teilweise definiert ist mittels eines ersten Leiters (26B), und einen zweiten, von dem ersten Kreis unabhängigen Alarmkreis, wenigstens teilweise definiert mittels eines zweiten Leiters (26C),
dadurch gekennzeichnet, daß
das Alarmsystem vorgesehen ist zum Schutz flexibler Verschlüsse (10, 14) oder Umhüllungen, und dadurch, daß der erste und der zweite Leiter (26B, 26C) eingeschlossen sind in einer gemeinsamen äußeren Umhüllung (28) zusammen mit wenigstens einem anderen Attrappen-"Leiter" (26A) von im wesentlichen mit den beiden genannten Leitern (26B, 26C) identischem Erscheinungsbild, der aber nicht Teil eines Kreises bildet, zur Definition eines Kabels (24), welches gelegt ist als Netzwerk (16) über eine Oberfläche des zu schützenden, flexiblen Verschlußmaterials (10, 14).

2. Ein System gemäß Anspruch 1, dadurch gekennzeichnet, daß der zweite Alarmkreis zur Feststellung und zum Wachen gegen Versuche zum Beeinträchtigen oder Manipulieren des Kabels (24) dient.

3. Ein System gemäß Anspruch 1, dadurch gekennzeichnet, daß die Leiter bzw. Kabeladern (26A, 26B, 26C) miteinander verflochten, verdreht oder plattiert sind innerhalb der Umhüllung (28).

4. Ein Alarmsystem gemäß Anspruch 1, dadurch gekennzeichnet, daß das Kabel (24) getragen ist von einem Trägerstreifen (20), der vorgesehen ist zur Anbringung an dem flexiblen Verschlußmaterial (10, 14).

5. Ein System gemäß Anspruch 1, dadurch gekennzeichnet, daß wenigstens einer der genannten Leiter (26A, 26B, 26C) aus einer Vielzahl von miteinander verdrehten Drähten (30) besteht.

## Revendications

1. Système d'alarme comprenant un premier circuit d'alarme au moins partiellement déterminé au moyen d'un premier conducteur (26B), un second circuit d'alarme indépendant du dit premier circuit et au moins partiellement déterminé au moyen d'un second conducteur (26C).
caractérisé en ce que le système d'alarme est destiné à protéger des fermetures souples (10,14) et en ce que les premier et second conducteurs (26B,26C) sont contenus dans une gaine extérieure commune en même temps qu'au moins un autre "conducteur" factice (26A) ayant pratiquement le même aspect que les deux dits conducteurs (26B,26C) mais ne faisant partie d'aucun circuit, pour constituer un fil (24) qui s'étend sous forme de réseau sur une surface de la fermeture souple (10,14) à protéger.

2. Système selon la revendication 1, caractérisé en ce que le second circuit d'alarme est destiné à détecter les tentatives de tripatouillage du fil (24) et à en avertir.

3. Système selon la revendication 1, caractérisé en ce que les conducteurs (26A,26B,26C) sont nattés, tordus ou tressés à l'intérieur de la dite gaine (28).

4. Système selon la revendication 1, caractérisé en ce que le fil (24) est supporté par un ruban de renforcement destiné à être fixé sur la fermeture souple (10,14).

5. Système selon la revendication 1, caractérisé en ce que l'un au-moins des dits conducteurs (26A, 26B,26C) est constitué de plusieurs fils (30) tordus ensemble.
